# EUROPÄISCHE PATENTANMELDUNG

(11) **EP 4 737 403 A1**
(43) Veröffentlichungstag der Anmeldung: **06.05.2026**
(21) Anmeldenummer: 25211812.0
(22) Anmeldetag: 28.10.2025
(51) Int. Cl.: C02F 3/12, C02F 1/02, C02F 1/66, C02F 3/30

(54) **VERFAHREN UND VORRICHTUNG ZUR ABREICHERUNG VON PHOSPHOR AUS ABWASSER**

(30) Priorität: 31.10.2024 DE 102024131874
(71) Anmelder: CNP CYCLES GMBH, 63755 Alzenau (DE)
(72) Erfinder: Prof. Dr. Pfeiffer, Wolfgang, 23970 Wismar (DE); Klamp, Thomas, 63456 Hanau (DE)
(74) Vertreter: Stoffregen, Hans-Herbert

(57) **Zusammenfassung**

Die Erfindung bezieht sich auf eine Vorrichtung und ein Verfahren zur Abreicherung von Phosphor aus Abwasser, das zumindest mechanisch und sodann biologisch gereinigt wird. Ein Teilstrom von dem in einem anaeroben Prozess anfallenden, Orthophosphat enthaltenden Schlamm wird einer Fest/Flüssigkeitstrenneinrichtung (42) zugeführt, wobei die abgetrennte Flüssigkeit einer Einrichtung (60) zugeführt wird, in der Phosphatkristalle und/oder schwerlösliche Phosphatsalze enthaltender Phosphatfällungsschlamm gebildet werden. Nach Abscheiden der Kristalle und/oder dem schwerlösliche Phosphatsalze enthaltenden Fällungsschlamm wird die Flüssigkeit oder zumindest ein Teil dieser in die biologische Reinigungsstufe zurückgeführt.

## Beschreibung

Die Erfindung bezieht sich auf ein Verfahren zur Abreicherung von Phosphor aus Abwasser, das zumindest mechanisch und sodann biologisch gereinigt wird, wobei bei der biologischen Abwasserreinigung in einer ersten Prozessstufe ein anaerober Prozess und in einer zweiten Prozessstufe zumindest ein aerober Prozess durchgeführt werden, und in der biologischen Reinigung anfallender Nachklärschlamm als Rücklaufschlamm der anaeroben ersten Prozessstufe zugeführt wird.

Auch ist Gegenstand der Erfindung eine Vorrichtung zur Abreicherung von Phosphor aus Abwasser, umfassend eine mechanische Klärstufe und eine biologische Klärstufe, die ihrerseits eine anaerobe erste Prozessstufe, zumindest eine aerobe zweite Prozessstufe und eine Nachklärung enthält.

Phosphor ist für die Organismen ein lebenswichtiger Stoff, der in der Erdkruste in gebundener Form vorkommt und zumindest in der Flora und Fauna bzw. lebenden Organismen nicht substituierbar ist.

Phosphor ist beispielsweise bei der Produktion von Lebensmitteln, beim Wachstum von Pflanzen und als Dünger und in der Industrie bei der Eisen- und Stahlerzeugung erforderlich. Insbesondere in der Landwirtschaft wird Phosphor umfassend eingesetzt.

Auch wenn die natürlichen Vorkommen von Phosphor über eine Vielzahl von Jahrzehnten hinaus nicht erschöpft zu sein scheinen, sind umfassende Bestrebungen in Gange, Phosphor rückzugewinnen. Dabei kommt der Wiedergewinnung von Phosphor aus Abwasser besondere Bedeutung zu.

Es gibt eine Vielzahl von Verfahren, um Phosphor rückzugewinnen, z.B. aus Schlammwasser durch Adsorption, Fällung, Kristallisation oder durch Einsatz von Pellets oder aus Faulschlamm mittels oder ohne Laugung oder aus Asche durch deren thermischen oder- chemischen Aufschluss oder aus Rohschlamm durch Fällung und Kristallisation.

Der DE 101 12 934 B4 ist ein Verfahren zu entnehmen, bei dem Faulschlamm belüftet wird, um durch CO₂-Strippung den pH-Wert zu erhöhen, wobei bei gleichzeitiger Zugabe von Magnesiumchlorid Struvit ausgefällt wird.

Das gleiche Prinzip gelangt nach der EP 2 028 161 B1 zur Anwendung. Dabei wird ein Reaktionsbehälter benutzt, in dem Schlamm im Kreislauf geführt wird.

Die DE 10 2008 050 349 B4 beschreibt ein Verfahren zur Ausfällung von Phosphor aus Phosphat belastetem Abwasser unter Bildung von Struvit-Kristallen. Das Abwasser durchläuft zunächst eine Anaerobstufe, das sodann in einer Ausstrip-Stufe mit Luft und anschließend in einer Kristallisationsstufe mit Magnesiumchlorid versetzt wird. Sich bildende Struvit-Pellets werden vom Boden des Reaktors entfernt.

Nach der WO 2019/141460 A1 erfolgt eine Rückgewinnung von Magnesiumammonium-Phosphat aus Schlamm, der einem Reaktionsbehälter zugeführt wird, in dem ein aerobes Milieu herrscht. Dabei wird der Schlamm durch Belüftung unterstützt in einem Kreislauf geführt.

Nach der WO 2020/161063 A1 erfolgt die Rückgewinnung von Phosphor in Kläranlagen aus Schlamm, der unter anaeroben Prozessbedingungen vorversäuert und anschließend der pH-Wert durch Zugabe zumindest einer alkalischen kalziumhaltigen Chemikalie angehoben wird. Dabei werden Brushit-Kristalle durch Kalzium-Ionen der Chemikalie gebildet und ausgefällt.

Der EP 2 429 687 B1 sind ein Verfahren zur biologischen Behandlung von Biomüll und eine hierfür bestimmte Anlage zu entnehmen.

Gegenstand der DE 43 08 156 A1 ist eine Anlage für die Reinigung für Abwasser.

Die Klärschlammverordnung von 2017 erklärt das Ziel, dass bis Ende der 20er Jahre / Anfang der 30er Jahre kommunale Kläranlagen für mehr als 100.000 bzw. mehr als 50.000 Einwohner Phosphor aus dem Abwasser rückgewinnen müssen. Sofern dies mit einem kläranlagenintegrierten Phosphor-Abreicherungsprozess auf dem Kläranlagengelände geschieht, ist für den zu entsorgenden Klärschlamm ein maximaler Grenzwert für den Phosphorgehalt von 20 g P/kg TR vorgegeben (TR = Trockenmasse gemäß DIN 4045).

Untersuchungen haben ergeben, dass bei bislang herkömmlicher Phosphorrückgewinnung aus Schlamm oder aus Schlammwasser die vorgegebenen Grenzwerte ohne immensen Einsatz von Chemikalien kaum erreichbar sind.

Es ist daher Aufgabe der vorliegenden Erfindung, ein Verfahren und eine Vorrichtung der eingangs genannten Art so weiterzubilden, dass im erforderlichen Umfang Phosphor rückgewonnen werden kann, um gewünschte Grenzwerte für den Phosphorgehalt im zu entsorgenden Klärschlamm zu erreichen.

Zur Lösung dieser Aufgabe sieht die Erfindung im Wesentlichen vor ein Verfahren zur Abreicherung von Phosphor aus Abwasser, das zumindest mechanisch und sodann biologisch gereinigt wird, wobei bei der biologischen Reinigung in einer ersten Prozessstufe ein anaerober Prozess und in einer zweiten Prozessstufe zumindest ein aerober Prozess durchgeführt werden, und in der biologischen Reinigung anfallender Nachklärschlamm als Rücklaufschlamm der anaeroben ersten Prozessstufe zugeführt wird, wobei sich das Verfahren dadurch auszeichnet, dass ein Teilstrom von in dem anaeroben Prozess der ersten Prozessstufe anfallendem Orthophosphat enthaltendem Bio-P-Schlamm oder zumindest ein Teilstrom des Rücklaufschlamms, der zum Freisetzen von Orthophosphat anaeroben Bedingungen ausgesetzt wird, einer ersten Fest/Flüssigkeitstrenneinrichtung zugeführt wird, dass in der ersten Fest/Flüssigkeitstrenneinreichung abgetrennter Flüssigkeit zumindest eine magnesium- oder kalziumhaltige Chemikalie zur Bildung von Phosphatkristallen und/oder schwerlösliche Phosphatsalze enthaltendem Phosphatfällungsschlamm zugegeben wird, und dass nach Abscheiden der Phosphatkristalle und/oder des die schwerlöslichen Phosphatsalze enthaltenden Phosphatfällungsschlamms die Flüssigkeit oder zumindest ein Teil dieser der biologischen Reinigungsstufe, vorzugsweise nach der ersten Prozessstufe in die zweite Prozessstufe, zurückgeführt wird.

Erfindungsgemäß ist insbesondere im Wesentlichen ein Verfahren zur Abreicherung von Phosphor aus Abwasser vorgesehen, in dem das Abwasser zumindest mechanisch und sodann biologisch gereinigt wird, wobei bei der biologischen Reinigung in einer ersten Prozessstufe ein anaerober Prozess und in einer zweiten Prozessstufe zumindest ein aerober Prozess durchgeführt werden, und in der biologischen Reinigung anfallender Nachklärschlamm als Rücklaufschlamm der anaeroben ersten Prozessstufe zugeführt wird. Das Verfahren zeichnet sich dadurch aus, dass ein Teilstrom von in dem anaeroben Prozess der ersten Prozessstufe anfallendem Orthophosphat enthaltendem Bio-P-Schlamm oder zumindest ein Teilstrom des Rücklaufschlamms, der zum Freisetzen von Orthophosphat, insbesondere zusammen mit vorgeklärtem Abwasser anaeroben Bedingungen, vorzugsweise in einer Anaerobeinrichtung, ausgesetzt wird, einer ersten Fest/Flüssigkeitstrenneinrichtung zugeführt wird.

Der ersten anaeroben Stufe oder der Anaerobeinrichtung kann zur Intensivierung der Phosphorrücklösung Flüssigkeit einer dritten Fest/Flüssigkeitstrenneinrichtung zugeführt werden, in der in einer vorgelagerten Vorklärschlammvorversäuerung biologisch leicht abbaubare Stoffe angereichert wurden. Durch die deutlich kleinere Reaktorgröße der Anaerobeinrichtung im Vergleich zur ersten anaeroben Prozessstufe wird eine höhere Konzentration an den zugeführten biologisch leicht abbaubaren Stoffen und damit eine stärkere Intensivierung der Phosphorrücklösung erreicht.

Das Verfahren zeichnet sich des Weiteren dadurch aus, dass in der ersten Fest/Flüssigkeitstrenneinreichung abgetrennter Flüssigkeit zumindest eine magnesium- oder kalziumhaltige Chemikalie zur Bildung von Phosphatkristallen und/oder schwerlösliche Phosphatsalze enthaltendem Phosphatfällungsschlamm zugegeben wird, und dass nach Abscheiden der Phosphatkristalle und/oder des die schwerlöslichen Phosphatsalze enthaltenden Phosphatfällungsschlamms die Flüssigkeit oder zumindest ein Teil dieser vorzugsweise nach der ersten Prozessstufe in die zweite Prozessstufe zurückgeführt wird.

Die Erfindung zeichnet sich somit insbesondere dadurch aus, dass ein Teilstrom von in dem anaeroben Prozess anfallendem Orthophosphat enthaltendem Bio-P-Schlamm einer ersten Fest/Flüssigkeitstrenneinrichtung zugeführt wird, dass in der ersten Fest/Flüssigkeitstrenneinreichung abgetrennte Flüssigkeit einer Ausfälleinrichtung zugeführt wird, in der Phosphatkristalle und/oder schwerlösliche Phosphatsalze enthaltender Phosphatfällungsschlamm durch Zugabe von magnesium- oder kalziumhaltigen Chemikalien gebildet werden, und dass nach Abscheiden der Phosphatkristalle und/oder schwerlösliche Phosphatsalze enthaltendem Fällungsschlamm die Flüssigkeit oder zumindest ein Teil dieser in die zweite Prozessstufe der biologischen Reinigungsstufe nach der anaeroben ersten Prozessstufe zurückgeführt wird, oder dass der Rücklaufschlamm oder zumindest ein Teil von diesem zum Freisetzen von Orthophosphat anaeroben Bedingungen in einer Anaerobeinrichtung ausgesetzt wird, dass anschließend eine Trennung von Flüssigkeit und Feststoffen erfolgt, dass der Flüssigkeit zur Bildung von Phosphatkristalle und/oder schwerlösliche Phosphatsalze enthaltendem Phosphatfällungsschlamm magnesium- oder kalziumhaltige Chemikalien zugegeben wird und dass nach Abscheiden der Phosphatkristalle und/oder des die schwerlöslichen Phosphatsalze enthaltenden Phosphatfällungsschlamms die Flüssigkeit vorzugsweise nach der anaeroben ersten Prozessstufe der zweiten Prozessstufe zugeführt wird.

Erfindungsgemäß ist vorgesehen, dass ein Teilstrom direkt aus dem Kreislauf der biologischen Abwasserreinigungsstufe entnommen und für die Phosphorrückgewinnung behandelt wird. Diese Teilstromentnahme aus dem vorgenannten Kreislauf kann einerseits aus der anaeroben ersten Prozessstufe oder andererseits aus dem Rücklaufstrom erfolgen.

Im erstgenannten Fall enthält der Teilstrom bereits eine hohe Konzentration an gelösten ortho-Phosphat, da der Abzug nach dem Bio-P-Prozess erfolgt.

Im zweiten Fall wird der abgezogene Teilstrom erst noch einem Bio-P-Prozess zugeführt, welcher separat und parallel zur ersten anaeroben Prozessstufe in einem kleineren Teilstrom-Bio-P-Becken stattfindet, dessen Prozess aufgrund seiner überschaubaren Größe einfacher zu optimieren ist.

Im Falle, dass ein Teilstrom von dem in der anaeroben ersten Prozessstufe anfallenden Orthophosphat enthaltenden Bio-P-Schlamm der ersten Fest/Flüssigkeitstrenneinrichtung zugeführt wird, wird in der ersten Fest/Flüssigkeitstrenneinrichtung abgetrennte Flüssigkeit einer Ausfälleinrichtung zugeführt, in der phosphathaltiger Fällungsschlamm und/oder Phosphatkristalle gebildet werden, und dass nach Abscheiden von Phosphatsalze enthaltendem Fällungsschlamm und/oder von Kristallen die Flüssigkeit oder zumindest ein Teil dieser in die biologische Reinigung, und zwar vorzugsweise nach der ersten Prozessstufe in die zweite Prozessstufe zurückgeführt wird.

Erfindungsgemäß wird der Phosphorabreicherungsprozess in der Abwasserreinigungsstufe und nicht erst im Bereich der Schlammbehandlungsanlage durchgeführt.

Aus dem Kreislauf der biologischen Abwasserreinigungsstufe kann entweder direkt aus der anaeroben ersten Prozessstufe phosphatreicher Bio-P-Schlamm als Teilstrom abgezogen werden oder ein zuvor über Bio-P-Becken vorbehandeltes Schlamm/Abwassergemisch nach der Nachklärung aus dem Rücklaufschlamm, also nach der Nachklärung zur Verfügung stehender Schlamm, abgezogen und in ein Teilstrom-Bio-P-Becken (Anaerobeinrichtung) gegeben werden.

Im ersten Fall wird ein Teilstrom der anaeroben Prozessstufe der biologischen Reinigung als Bio-P-Schlamm abgezogen und einem ersten Fest/Flüssigkeitstrennprozess unterzogen aus welchem abgetrennter Schlamm der biologischen Abwasserreinigungsstufe vorzugsweise nach der anaeroben ersten Prozessstufe zumindest teilweise wieder zugeführt und abgetrennte Flüssigkeit durch Zugabe von Chemikalien eine Fällung von phosphathaltigen Fällungsschlamm bzw. Phosphatkristallen durchgeführt, die sodann in einer zweiten Fest/Flüssigkeitstrenneinrichtung als phosphathaltiges Produkt abgetrennt werden. Verbleibende Flüssigkeit wird der biologischen Abwasserreinigungsstufe - direkt oder indirekt - wieder zugeführt. Die Prozessschritte Fällung/Kristallisation und Abtrennung des phosphathaltigen Produkts von der Flüssigkeit kann hierbei auch in einer gemeinsamen Vorrichtung erfolgen.

Mit anderen Worten wird entweder - wie im ersten Fall - ein Teilstrom der anaeroben Prozessstufe der biologischen Reinigung als Bio-P-Schlamm abgezogen und einem ersten Fest/Flüssigkeitstrennprozess unterzogen, oder es wird - wie im zweiten Fall - zumindest ein Teilstrom des Rücklaufschlamms in einer Anaerobeinrichtung vorbehandelt und aus dieser als Bio-P-Schlamm abgezogen und einem ersten Fest/Flüssigkeitstrennprozess unterzogen.

In dem ersten Fest/Flüssigkeitstrennprozess abgetrennter Schlamm wird der biologischen Abwasserreinigungsstufe vorzugsweise nach der anaeroben ersten Prozessstufe zumindest teilweise wieder zugeführt und zumindest teilweise als Überschussschlamm der Schlammbehandlung zugeführt, bei der in dem dritten oder in einem vierten Fest/Flüssigkeitstrennprozess der Schlamm in aller Regel durch Zugabe von Flockungshilfsmitteln konzentriert wird. Die abgetrennte Flüssigkeit wird einer Fällungs- und Kristallisationseinheit (erste Einrichtung) zugeführt, in welcher durch Zugabe von Chemikalien eine Fällung von phosphathaltigen Fällungsschlamm bzw. Phosphatkristallen durchgeführt wird, die sodann in einer zweiten Fest/Flüssigkeitstrenneinrichtung als phosphathaltiges Produkt abgetrennt werden. Verbleibende Flüssigkeit wird der biologischen Abwasserreinigungsstufe wieder zugeführt.

Die Prozessschritte Fällung/Kristallisation und Abtrennung des phosphathaltigen Produkts von der Flüssigkeit können hierbei auch in einer gemeinsamen Vorrichtung erfolgen.

Die Flüssigkeit aus dem dritten Fest/Flüssigkeitstrennprozess wird der ersten anaeroben Stufe oder der Anaerobeinrichtung zugeführt. Die Flüssigkeit des vierten Fest/Flüssigkeitstrennprozesses kann mit der Flüssigkeit aus dem ersten Fest/Flüssigkeitstrennprozess vor der Einleitung in die erste Einrichtung vereinigt werden.

Es besteht auch die Möglichkeit, die der biologischen Reinigungsstufe zuzuführende Flüssigkeit zuvor einer weiteren nachgeschalteten Trenneinrichtung zuzuführen, es wird somit der biologischen Abwasserreinigungsstufe indirekt die Flüssigkeit zugeführt, um die abgetrennte Flüssigkeit der biologischen Reinigungsstufe und die Feststoffe bzw. kleine, nicht von der zweiten Fest/Flüssigkeitstrenneinrichtung abgeschiedenen Kristalle der ersten Einrichtung zuzuführen, in der die kleinen Kristalle sodann weiter wachsen und im wiederholten Durchgang der zweiten Fest/Flüssigkeitstrenneinrichtung als phosphathaltiges Produkt abgeschieden werden können.

Ferner sollte in der biologischen Klärstufe anfallender Nachklärschlamm - ggf. teilweise, vorzugsweise vollständig - als Rücklaufschlamm der anaeroben ersten Prozessstufe zugeführt werden.

Es erfolgen insbesondere drei Stoffstromläufe, in denen der anaerobe Prozess integriert ist. In einem ersten Stoffstromlauf wird aus der anaeroben ersten Prozessstufe oder aus der Anaerobeinrichtung entnommener Schlamm (Bio-P-Schlamm) über eine erste Fest/Flüssigkeitstrenneinrichtung geführt, um zumindest einen Teil der Feststoffe an die biologische Abwasserreinigungsstufe nach der anaeroben erste Prozessstufe zurückzuführen, während der restliche Teil als Überschussschlamm abgeführt wird.

Der in der ersten Fest/Flüssigkeitstrenneinrichtung abgetrennten Flüssigkeit werden Chemikalien zum Ausfällen von phosphorhaltigen Fällungsschlamm bzw. Phosphatkristallen zugegeben, um nach Abscheiden bzw. Abtrennen des Fällungsschlamms bzw. der Kristalle vorhandene Flüssigkeit zurück zu der biologischen Abwasserreinigungsstufe zu leiten (2. Stoffstromlauf).

Der dritte Stoffstromlauf ist derjenige, bei dem der Nachklärschlamm als Rücklaufschlamm der anaeroben ersten Prozessstufe oder zumindest teilweise der Anaerobeinrichtung zugeführt wird. Die Erfindung wird selbstverständlich nicht verlassen, wenn nur ein Teil des Nachklärschlamms zurückgeführt wird. Auch dieser Teil wird als Rücklaufschlamm bezeichnet.

Die Nachklärung erfolgt nach der aeroben Prozessstufe, der sogenannten Nitrifikationsstufe, der eine unbelüftete, anoxische Stufe vor- und nachgeschaltet sein kann.

Die Nachklärung kann auch als Membrantechnologie ausgeführt sein.

Auch ist es möglich, dass die biologische Abwasserreinigungsstufe einschließlich Nachklärung in einen zeitlich sequentiell betriebenen Bio-Reaktor im Aufstaubetrieb, als sogenannte SBR-Anlagen ausgeführt ist.

Erfindungsgemäß wird der anaerobe Prozess in einem an und für sich bekannten Bio-P-Becken - im Abwasser-Hauptstrom als anaerobe erste Prozessstufe und im Nebenstrom als Anaerobeinrichtung bezeichnet - durchgeführt, in dem anaerobe Bedingungen herrschen, d.h. der Sauerstoff ist weder gelöst (aerobe Bedingung) noch an Stickstoff in Form von Nitrat gebunden (anoxische Bedingung) vorhanden. Unter diesen Bedingungen wird Phosphor rückgelöst und geht als Orthophosphat in die wässrige Phase des Bio-P-Schlamms über.

Hierzu sollte leicht abbaubarer CSB ausreichend im Zulauf zum Bio-P-Becken zur Verfügung gestellt werden.

Erfindungsgemäß wird ein Teilstrom des orthophosphatreichen Ablaufs dem Bio-P-Becken entnommen, wobei sodann aus dem als Bio-P-Schlamm zu bezeichnenden Abwasser weitgehend Flüssigkeit in der ersten Fest/Flüssigkeitstrenneinrichtung abgetrennt wird. Ein Teilstrom der so abgetrennten Feststoffe kann in eine Überschussschlammeindickung gelangen, während die restlichen Feststoffe in die biologische Abwasserreinigungsstufe vorzugsweise nach dem Bio-P-Becken zurückgeführt werden.

Das Abziehen eines Teils des Rücklaufschlammstroms, der nicht der anaeroben ersten Prozessstufe zugeführt wird und als Überschussschlamm zu bezeichnen ist, wird nicht benötigt, kann aber als Ausfallstrategie verwendet werden. Dies kommt insbesondere dann in Frage, wenn das erfindungsgemäße Verfahren bei einer vorhandenen Anlage zum Einsatz gelangt, bei dem eine direkte Verbindung zwischen Rücklaufschlammleitung und Überschussschlammeindickung vorhanden ist, die nach dem erfindungsgemäßen Verfahren stillgelegt werden kann.

Aus der orthophosphatreichen Flüssigkeit der ersten Fest/Flüssigkeitstrenneinrichtung wird anschließend durch Zugabe von Fällungschemikalien Phosphor gefällt bzw. kristallisiert. In einer darauffolgenden zweiten Fest/Flüssigkeitstrenneinrichtung werden ausgefällte Kristalle bzw. Phosphatsalze enthaltenen Fällungsschlamm abgeschieden und die verbleibende Flüssigkeit wird der biologischen Abwasserreinigungsstufe vorzugsweise nach dem Bio-P-Becken zugeführt.

Ausfällen bzw. Kristallisation und nachfolgendes Abscheiden kann auch in einer Einrichtung erfolgen.

Dabei ist insbesondere vorgesehen, dass der anaeroben ersten Prozessstufe 5 Vol.-% bis 30 Vol.-%, insbesondere 5 Vol.-% bis 20 Vol.-%, orthophosphatreicher Ablauf, dem sogenannten Bio-P-Schlamm entnommen und in zuvor beschriebener Weise geführt wird.

Der Ablauf aus der anaeroben ersten Prozessstufe ist ein Schlamm/Abwassergemisch.

Erfindungsgemäß nutzt man für die Phosphorabreicherung aus dem Abwasserbehandlungsprozess die anaerobe erste Prozessstufe für die biologische PhosphorElimination, die in einem sogenannten Bio-P-Becken durchgeführt werden kann. In diesem Verfahrensschritt lösen sich Phosphate aus Polyphosphatspeichern von spezialisierten (heterotrophen) Mikroorganismen bei Anwesenheit von biologisch gut und einfach abbaubaren Abwasserinhaltsstoffen (leicht abbaubarer CSB), wie z.B. organischen Säuren, wie Essigsäure, zurück. Die Phosphat-Rücklösung findet dann ohne externe Zugabe von Chemikalien statt.

Um die Bildung von vorgenannten Polyphosphatspeichern zu bewirken, werden die Mikroorganismen Stresssituationen durch einen Wechsel von anaeroben substratreichen Bedingungen (Bio-P-Becken) und aeroben substratarmen Bedingungen (Belebungsbecken) ausgesetzt. Dieses Speichern von Polyphosphat wird nach dem Rücklöseprozess benutzt, um aus dem so zur Verfügung stehenden orthophosphatreichen Abwasser im Ablauf der anaeroben ersten Prozessstufe Phosphat im Nebenschluss durch Fällung und Kristallisation deutlich abzureichern und dem Abwasser zu entnehmen.

Dadurch, dass man das nach der anaeroben Prozessstufe in der aeroben biologischen Reinigungsstufe in den Belebtschlammzellen gespeicherte Phosphat vollständig oder zumindest zum Teil über den Rücklaufschlamm im Kreislauf führt, ist in einem Umfang Phosphor rückgewinnbar, dass vorgegebene Grenzwerte in dem zu entsorgenden Klärschlamm erzielt werden, insbesondere ein Phosphorgehalt von 20 g P/kg TR nach der Klärschlammverordnung von 2017. Diese variable Einstellbarkeit gilt grundsätzlich, wenn aus dem Kreislauf der biologischen Abwasserreinigungsstufe der für die Phosphorrückgewinnung vorgesehene Teilstrom abgezogen wird, wobei dieser Abzug erfindungsgemäß entweder aus der anaeroben ersten Prozessstufe oder aus dem Rücklaufschlammstrom erfolgen kann.

Um den biologischen Phosphorrücklöseprozess in der anaeroben Prozessstufe, im Bio-P-Becken, zu stabilisieren und zu intensivieren, ist insbesondere vorgesehen, dass in der mechanischen Abwasserreinigungsstufe anfallender Vorklärschlamm einer Vorklärschlamm vorversäuernden Stufe und anschließend einer dritten Fest/Flüssigkeitstrenneinrichtung zugeführt wird. In der Vorklärschlamm vorversäuernden Stufe wird unter anaeroben Bedingungen und ggf. adäquater, den Prozess unterstützender Beheizung eine Vorversäuerung durchgeführt. Die Vorklärschlamm vorversäuernde Stufe und die dritte Fest/Flüssigkeitstrenneinrichtung können in einer Vorrichtung ausgeführt sein. Die abgetrennte Flüssigkeit wird der anaeroben ersten Prozessstufe der biologischen Abwasserreinigung oder der Anaerobeinrichtung zugeführt.

Die unter anaeroben Bedingungen durchgeführte Vorversäuerung bewirkt das Entstehen von kurzkettigen organischen Säuren, im Wesentlichen Essigsäure, die über der in der dritten Fest/Flüssigkeitstrenneinrichtung abgetrennten Flüssigkeit in die anaerobe erste Prozessstufe oder in die Anaerobeinrichtung zugeleitet werden und dort als biologisch leicht abbaubare CSB-Quelle dienen und bei der Phosphat-Rücklösung zu der gewünschten Stabilisierung und Intensivierung führen.

In Weiterbildung ist vorgesehen, dass in der dritten Fest/Flüssigkeitstrenneinrichtung anfallender Schlamm einer Faulungsanlage zugeführt wird und der darin gebildete Faulschlamm einer weiteren Fest/Flüssigkeitstrenneinrichtung zugeführt wird, und dass in der weiteren auch als zu bezeichnende vierte Fest/Flüssigkeitstrenneinrichtung abgetrennte Flüssigkeit der Ausfälleinrichtung der Phosphorabreicherungsanlage, also der Fällungs- und Kristallisationseinheit, zugeführt wird.

Dieses Zuführen der Flüssigkeit in die Ausfälleinrichtung, die auch als Fällungs- und Kristallisationseinheit zu bezeichnen ist, ist insbesondere im Falle einer Struvitfällung zu nutzen; denn im Falle einer Struvitfällung wird der Wirkungsgrad der Phosphor-Abscheidung zum einen durch die Ammonium-Stickstoff-Konzentration beeinflusst, die durch die Zugabe der Flüssigkeit aus der Faulschlammentwässerung (vierte Fest/Flüssigkeitstrenneinrichtung) erreicht werden kann, und zum anderen durch den Ammoniumgehalt im Ablauf der anaeroben ersten Prozessstufe, dem Bio-P-Becken. Unabhängig hiervon ist insbesondere vorgesehen, dass der Ausfälleinrichtung, also der Fällungs- und Kristallisationseinheit, im Falle von Struvit magnesiumhaltige Chemikalien zugegeben werden.

Soll eine Brushit-Fällung erfolgen, werden kalziumhaltige Chemikalien zugegeben.

Gegebenenfalls ist sowohl für die Struvitfällung als auch für die Brushit-Fällung der für den Fällungsprozess erforderliche optimale pH-Wert in der Ausfälleinrichtung, d.h. der Fällungs- und Kristallisationseinheit durch Zugabe entsprechender Chemikalien einzustellen.

Alternativ zu der Entnahme eines phosphatreichen Teilstroms direkt aus der anaeroben ersten Prozessstufe kann dem Kreislauf der biologischen Abwasserreinigung der zur Phosphatrückgewinnung erforderliche Teilstrom im gleichen Maße aus dem Rücklaufschlamm erfolgen, der z.B. einem Teilstrom-Bio-P-Becken zugeführt wird, in dem bekanntlich anaerobe Bedingungen herrschen.

Nach diesem Vorschlag ist vorgesehen, dass der Rücklaufschlamm - ggf. ein Teil von diesem - mit zumindest einem Teil des vorgeklärten Abwassers versetzt wird und zum Freisetzen von Orthophosphat anaeroben Bedingungen ausgesetzt wird, dass anschließend eine Trennung von Flüssigkeit und Feststoffen erfolgt, dass der Flüssigkeit zur Bildung von phosphathaltigen Fällungsschlamm bzw. Phosphatkristallen magnesium- oder kalziumhaltige Chemikalien zugegeben werden und dass nach Abscheiden des phosphathaltigen Fällungsschlamms bzw. der Phosphatkristalle die Flüssigkeit dem Belebungsbecken nach der anaeroben ersten Prozessstufe dem Abwasser wieder zugeführt wird.

Prozesstechnisch unterscheiden sich die beiden aufgezeigten Wege im Wesentlich im Abzugsort des Teilstroms aus dem Kreislauf der biologischen Abwasserreinigungsstufe. Im Falle des Abzugs des Teilstroms aus dem Rücklaufschlamm ist ein dem der anaeroben ersten Prozessstufe hinsichtlich Aufgabe und Prozess gleichwirkende Teilstrom-Bio-P (Anaerobeinrichtung) anzufügen, wodurch die prozesstechnischen Abläufe beider dargestellten Wege einer gemeinsamen erfinderischen Lehre folgen.

Durch die Teilstrom-Bio-P wird der Rücklaufschlamm anaeroben Bedingungen ausgesetzt, um Orthophosphat freizusetzen.

Dabei sieht die Erfindung insbesondere vor, dass in der Anaerobeinrichtung (Teilstrom-Bio-P-Becken) anaerobe Bedingungen herrschen, dass der Anaerobeinrichtung (Teilstrom-Bio-P-Becken) entnommener Schlamm einer der ersten Fest/Flüssigkeitstrenneinrichtung entsprechenden Fest/Flüssigkeitstrenneinrichtung zugeführt wird, und dass der anfallenden Flüssigkeit die kalzium- oder magnesiumhaltigen Chemikalien zugeführt werden.

Besonders bevorzugt ist auch vorgesehen, dass der Vorklärschlamm einer der dritten Fest/Flüssigkeitstrenneinrichtung entsprechenden Fest/Flüssigkeitstrenneinrichtung zugeführt wird.

Des Weiteren sollte zumindest ein Teil vom Schlamm aus der ersten Fest/Flüssigkeitstrenneinrichtung einer Überschussschlammeindickung zugeführt werden. Die entnommenen Flüssigkeiten der ersten Fest/Flüssigkeitstrenneinrichtung und der Überschussschlammeindickung werden der Ausfälleinrichtung zugeführt. Die verbleibenden feststoffreichen Schlämme der dritten Fest/Flüssigkeitstrenneinrichtung und Überschussschlammeindickung werden der Faulungsanlage zugeführt.

Die dritte Fest/Flüssigkeitstrenneinrichtung und die Überschussschlammeindickung können auch als eine Vorrichtung ausgeführt werden und auch die Vorklärschlamm vorversäuernde Stufe kann in diese Vorrichtung integriert sein. Die abgetrennte Flüssigkeit dieser vorgenannten gemeinsamen Vorrichtung wird der Anaerobeinrichtung (Teilstrom-Bio-P-Becken) oder der ersten anaeroben Prozessstufe zugeleitet.

Dabei sollte unter anaeroben Bedingungen eine Vorversäuerung des Vorklärschlamms in einer Vorklärschlamm vorversäuernden Stufe erfolgen, um mittels der der dritten Fest/Flüssigkeitseinrichtung entnommenen Flüssigkeit den Phosphorrücklöseprozess in der Anaerobeinrichtung zu stabilisieren und zu intensivieren, wobei die den Vorklärschlamm vorversäuernde Stufe und die Fest/Flüssigkeitseinrichtung auch in einer Vorrichtung ausgeführt werden können.

Insbesondere ist vorgesehen, dass nach Ausfällen des Phosphatsalze enthaltenden Fällungsschlamms bzw. der Phosphatkristalle die Flüssigkeit aus der Ausfälleinrichtung der zweiten Fest/Flüssigkeitstrenneinrichtung zugeführt wird, von der anfallende Flüssigkeit der biologischen Abwasserreinigungsstufe vorzugsweise direkt in die zweite Prozessstufe nach der anaeroben ersten Prozessstufe zurückgeführt wird.

Die Erfindung zeichnet sich auch dadurch aus, dass in der zweiten Fest/Flüssigkeitstrenneinrichtung anfallende Flüssigkeit, die aus der Ausfälleinrichtung, also der Fällungs- und Kristallisationseinheit abfließen, einer weiteren nachgeschalteten Trenneinrichtung mit Unterlauf und Oberlauf zugeführt wird, wobei der Unterlauf zu der Ausfälleinrichtung oder zumindest mit der kalzium- oder magnesiumhaltigen Chemikalien versetzten Flüssigkeit führt und der Oberlauf der biologischen Abwasserreinigung nach dem Bio-P-Becken, also der anaeroben Prozessstufe, zugeführt wird.

Anzumerken ist, dass auch hierdurch entsprechend der Erfindung die Flüssigkeit der zweiten Fest/Flüssigkeitstrenneinrichtung der biologischen Reinigungsstufe, insbesondere nach der ersten Prozessstufe der zweiten Prozessstufe, zugeführt wird.

Sofern eine zweite Fest/Flüssigkeitstrenneinrichtung nicht vorhandenen ist, da in der Ausfälleinrichtung die Kristalle bzw. schwerlösliche Phosphatsalze enthaltender Phosphatfällungsschlamm abgeschieden werden, wird gleichfalls entsprechend der erfindungsgemäßen Lehre Flüssigkeit der biologischen Reinigungsstufe zugeführt. Die den Unterlauf und den Oberlauf aufweisende Trenneinrichtung kann selbstverständlich zuvor von der Flüssigkeit durchströmt werden, ohne dass die Erfindung verlassen wird.

Insbesondere ist vorgesehen, dass in der Abwasserreinigung zunächst in der ersten Prozessstufe anaerobe Bedingungen und sodann in der zweiten Prozessstufe anoxische und folgend aerobe Bedingungen herrschen.

Auch zeichnet sich die Erfindung dadurch aus, dass zur mechanischen Abwasserreinigung eine Rechenanlange und/oder ein Sandfang und/oder eine Vorklärung, insbesondere zumindest eine Vorklärung, verwendet werden.

Insbesondere ist auch vorgesehen, dass zur biologischen Abwasserreinigung zumindest ein Belebungsbecken, vorzugsweise zumindest mit einem anoxischen Belebungsbeckenteil zur Denitrifikation und ein aerobes Belebungsbeckenteil zur Nitrifikation, verwendet werden.

Denitrifikation und Nitrifikation können auch in einem Becken zeitlich versetzt erfolgen.

Die einzelnen Prozessschritte der biologischen Abwasserreinigung wie Bio-P, Denitrifikation, Nitrifikation und Nachklärung können in zeitlich sequentieller Abfolge in einem Reaktor, den sogenannten SBR-Anlagen (Sequential Batch Reactor) ausgeführt werden.

Eine Vorrichtung der eingangs genannten Art zeichnet sich dadurch aus, dass die Nachklärung über eine Anaerobeinrichtung mit einer ersten Fest/Flüssigkeitseinrichtung oder die anaerobe erste Prozessstufe (Bio-P-Becken) mit einer ersten Fest/Flüssigkeitstrenneinrichtung verbunden ist, dass die erste Fest/Flüssigkeitseinrichtung mit einer Ausfälleinrichtung verbunden ist, die ausgebildet ist zum Ausfällen von Kristallen und/oder Phosphatfällungsschlamm. Die Ausfälleinrichtung kann entweder ausgebildet sein zum Abtrennen von ausgefällten Kristallen und/oder schwerlösliche Phosphatsalze enthaltendem Phosphatfällungsschlamm und kann sodann mittelbar oder unmittelbar mit der biologischen Klärstufe, insbesondere nach der anaeroben Prozessstufe mit der zweiten Prozessstufe, verbunden sein. Erfolgt in der Ausfälleinrichtung kein Abtrennen - oder nicht im erforderlichen Umfang - so ist die Ausfälleinrichtung mit einer zweiten Fest/Flüssigkeitstrenneinrichtung zum Abtrennen von ausgefällten Kristallen und/oder schwerlösliche Phosphatsalze enthaltendem Phosphatfällungsschlamm verbunden, die ihrerseits mittelbar oder unmittelbar mit der biologischen Klärstufe, vorzugsweise nach der anaeroben Prozessstufe mit der zweiten Prozessstufe verbunden ist.

Die biologische Abwasserreinigungsstufe weist eine Nachklärung auf, wobei zwischen der Nachklärung und der anaeroben ersten Prozessstufe eine Verbindung besteht, über die Rücklaufschlamm der anaeroben ersten Prozessstufe zuführbar ist.

Die Nachklärung kann als Membrantechnologie ausgeführt sein oder als sogenannte SBR zeitlich versetzt zur Denitrifikation und Nitrifikation in einem Becken integriert sein.

Hervorzuheben ist des Weiteren, dass die mechanische Abwasserreinigungsstufe eine Vorklärung umfasst, von der Vorklärschlamm über eine Verbindung mit einer dritten Fest/Flüssigkeitstrenneinrichtung (statisch oder mechanisch) verbunden ist, in der entweder unmittelbar oder mittelbar zuvor zur Vorversäuerung anaerobe Bedingungen herrschen, und dass die dritte Fest/Flüssigkeitstrenneinrichtung über eine in der dritten Fest/Flüssigkeitstrenneinrichtung abgetrennte Flüssigkeit führende Verbindung mit der anaeroben ersten Prozessstufe der Abwasserreinigung oder der Anaerobeinrichtung (Teilstrom-Bio-P Becken) verbunden ist.

Insbesondere sollte die dritte Fest/Flüssigkeitstrenneinrichtung mittel- oder unmittelbar mit einer anaeroben Schlammstabilisierungsanlage und dieser nachgeordneten vierten Fest/Flüssigkeitstrenneinrichtung verbunden sein, die über eine in der vierten Fest/Flüssigkeitstrenneinrichtung abgetrennte Flüssigkeit führende Verbindung mit der Ausfälleinrichtung verbunden ist.

Des Weiteren ist eigenerfinderisch vorgesehen, dass die Vorrichtung eine Vorklärschlammversäuerungseinrichtung zur Vorversäuerung des Vorklärschlamms enthält, in der ein anaerobes Milieu herrscht, dass die Vorklärschlammversäuerungseinrichtung mit einer der dritten Fest/Flüssigkeitstrenneinrichtung entsprechenden Fest/Flüssigkeitstrenneinrichtung und mit einem Vorklärbecken der mechanischen Abwasserreinigungsstufe verbunden ist, dass in der dritten Fest/Flüssigkeitstrenneinrichtung anfallende Flüssigkeit mit der Anaerobeinrichtung (Teilstrom-Bio-P-Becken) zum Phosphorrücklöseprozess verbunden ist, dass in die Anaerobeinrichtung sowohl ein Teilstrom aus dem Rücklaufschlamm als auch ein Teilstrom aus dem mechanisch vorgeklärten Abwasser zulaufen, dass die Anaerobeinrichtung (Teilstrom-Bio-P-Becken) mit der ersten Fest/Flüssigkeitstrenneinrichtung verbunden ist, wobei die erste Fest/Flüssigkeitstrenneinrichtung über eine Flüssigkeit führende Verbindung mit der Ausfälleinrichtung, der Fällungs- und Kristallisationseinheit, verbunden ist, der die zweite Fest/Flüssigkeitstrenneinrichtung nachgeordnet ist, die einen ersten Anschluss zum Abführen von ausgeschiedenem phosphathaltigem Produkt und einen zweiten Anschluss für abzuführende Flüssigkeit aufweist, der mit dem Belebungsbecken nach der anaeroben ersten Prozessstufe verbunden ist.

Zur Stabilisierung der Phosphorrücklösung ist vorgesehen, dass der dritten Fest/Flüssigkeitstrenneinrichtung eine Vorklärschlamm vorversäuernde Stufe vorgeordnet ist.

Des Weiteren sollte die in der zweiten Fest/Flüssigkeitstrenneinrichtung angefallene Flüssigkeit vorzugsweise nach der anaeroben ersten Prozessstufe (nach dem Bio-P-Becken) in das Belebungsbecken eingeleitet werden.

Die den Rücklaufschlamm führende Verbindung bzw. Verbindungen sollte eine Verzweigung zum Zuführen eines Teils des Rücklaufschlamms zum Phosphorrücklöseprozess der Anaerobeinrichtung (Teilstrom-Bio-P-Becken) und der verbleibenden Teile zu einem den Belebungsbecken der biologischen Abwasserreinigung vorgeschalteten anaeroben Bio-P-Becken (erste Prozessstufe) aufweisen.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von bevorzugten Ausführungsbeispielen.

Es zeigen:
- Fig. 1: Ein Fließbild einer ersten Ausführungsform einer Phosphorabreicherung im Bereich der Abwasserreinigungsstufe,
- Fig. 2: ein Fließbild einer zweiten Ausführungsform einer Phosphorabreicherung im Bereich der Abwasserreinigungsstufe und
- Fig. 3: Konzentrationsverlauf gelösten Phosphors im Abwasser in einer biologischen Abwasserreinigungsstufe.

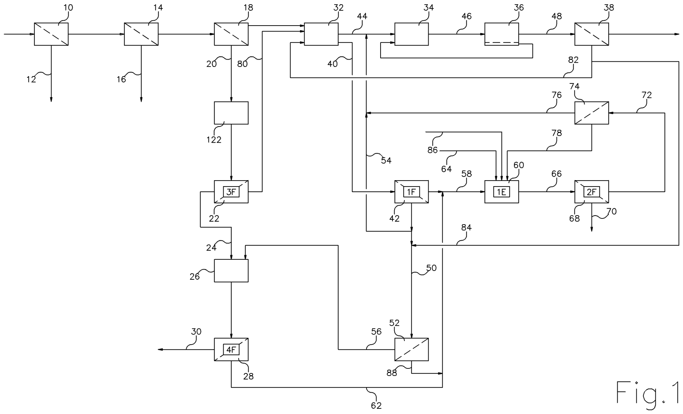

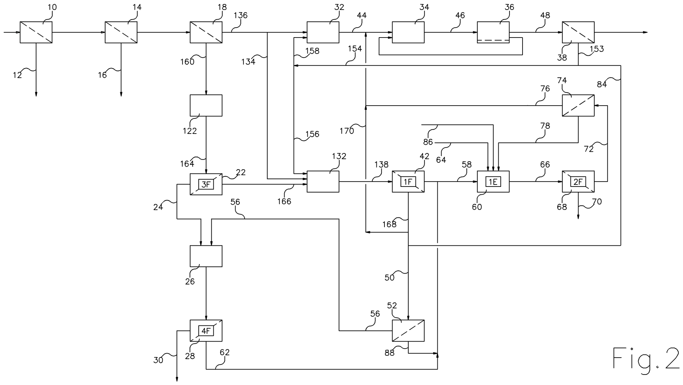

Den Fig. 1 und 2 sind Fließbilder zur Verdeutlichung der erfindungsgemäßen Lehre zu entnehmen, mittels der die Abreicherung von Phosphor aus Abwasser erfolgt. Dabei werden grundsätzlich für gleiche Elemente gleiche Bezugszeichen verwendet.

Der Fig. 1 ist ein Fließbild bzw. ein Grundschema einer Abwasserbehandlungsanlage zu entnehmen, in der ein optimierter Phosphorabreicherungsprozess durchgeführt wird. Dabei können die zur Abwasserreinigung benötigten Einrichtungen zum Teil von bestehenden Abwasseranlagen benutzt werden und werden in Bezug auf die Einrichtung ergänzt, die die erfindungsgemäße Phosphorabreicherung ermöglichen.

In der Fig. 1 wird z.B. einer Rechenanlage 10 Abwasser zugeführt, wobei das Rechengut über eine Leitung 12 abgeführt wird. Der Rechenanlage 10 ist ein Sandfang 14 nachgeordnet, wobei das Sandgut über eine Leitung 16 entfernt wird. Der Sandfang 14 ist im Ausführungsbeispiel mit einer Vorklärung 18 verbunden, in der eine Trennung zwischen suspendierten Feststoffen und Flüssigkeit erfolgt, wobei die Feststoffe über eine Leitung 20 und möglicherweise einer Vorklärschlamm vorversäuernden Stufe 122 mit einer (dritten) Fest/Flüssigkeitstrenneinrichtung 22 (3F) verbunden sind, aus der Feststoffe als eingedickter Vorklärschlamm über eine Leitung 24 einer anaeroben Schlammstabilisierungsanlage (Faulungsanlage) 26 zugeführt werden, dem eine (vierte) Fest/Flüssigkeitstrenneinrichtung 28 (4F) nachgeschaltet ist. Der entwässerte Faulschlamm wird über eine Leitung 30 als zu entsorgender Klärschlamm abgeführt.

Im Ausführungsbeispiel findet die mechanische Abwasserreinigungsstufe über die Rechenanlage 10, den Sandfang 14 und die Vorklärung 18 statt. Der mechanischen Abwasserreinigungsstufe schließt sich eine biologische Abwasserreinigungsstufe an, die im Ausführungsbeispiel entsprechend der Fig. 1 ein Bio-P-Becken 32 sowie ein Denitrifikationsbeckenteil 34 und ein Nitrifikationsbeckenteil 36 in einem Belebungsbecken als auch eine Nachklärung 38 umfasst.

In dem Bio-P-Becken 32 herrschen anaerobe Bedingungen, d.h. Sauerstoff ist weder gelöst noch an Stickstoff in Form von Nitrat gebunden vorhanden. Mit diesen Bedingungen wird Phosphat rückgelöst und geht als Orthophosphat in die wässrige Phase des dem Bio-P-Becken 32 zu entnehmenden Bio-P-Schlamm über, sofern leicht abbaubarer CSB ausreichend im Zulauf zum Bio-P-Becken 32 zur Verfügung steht. In dem Bio-P-Becken 32 erfolgt eine biologische Phosphorrücklösung. Es lösen sich Phosphate aus Polyphosphatspeichern von spezialisierten heterotrophen Mikroorganismen bei Anwesenheit von biologisch gut und einfach abbaubaren Abwasserinhaltsstoffen (leicht abbaubarer CSB), wie z.B. organischen Säuren, zurück.

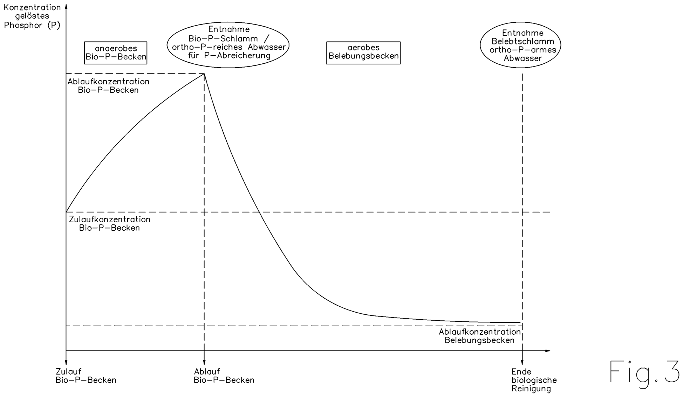

Diese Lösung von Phosphor ist auch anhand von Fig. 3 verdeutlicht. In der Abszisse ist der Ort der biologischen Reinigung des Abwassers dargestellt und in der Ordinate die Konzentration von gelöstem Phosphor. So erkennt man, dass zwischen Zulauf und Ablauf aus dem Bio-P-Becken 32 aufgrund der auf den Mikroorganismen einwirkenden Stresssituation Phosphor rückgelöst wird, so dass beim Austritt aus dem Bio-P-Becken 32 die Konzentration von gelöstem Phosphor am höchsten ist. Werden die Mikroorganismen anschließend aeroben Bedingungen ausgesetzt, insbesondere im Nitrifikationsbecken 36, also im Belebungsbecken, so lagert sich vermehrt Phosphor an Polyphosphatspeichern der Mikroorganismen an, so dass die im Abwasser gelöste Phosphorkonzentration abnimmt, wie die Fig. 3 verdeutlicht.

Anstieg und Abfall der Gehalte an Orthophosphat im Bio-P-Becken und im Nitrifikationsbecken sind so nur messbar, sofern diese Becken stark kaskadiert ausgeführt sind. In den üblichen nahezu ideal durchmischten Becken stellen sich jeweils die Ablaufgehalte in den Becken ein. Die Darstellung in Fig. 3 ist nur zum besseren Verständnis und der besseren Nachvollziehbarkeit der biologischen Abbauvorgänge für die eher unübliche Ausführung in stark kaskadierter Form gewählt worden.

Erfindungsgemäß wird ein Teil des Bio-P-Schlamms, der am Austritt des Bio-P-Beckens 32 zur Verfügung steht, teilweise in einem gesonderten Stoffstromlauf geführt, wie nachstehend erläutert wird.

Es wird aus diesem Schlamm-Kreislauf üblicherweise der voreingedickte Überschussschlamm in dem Umfang ausgeschleust, wie in der Biologie Belebtschlamm nachwächst. Aus der biologischen Abwasserreinigung wird in der Regel über die Nachklärung der Ablauf ausgeschleust, in dem Umfang wie der Kläranlage Abwasser zufließt.

So wird ein Teilstrom des Bio-P-Schlamms einer (ersten) Fest/Flüssigkeitstrenn-einrichtung 42 (1F) zugeleitet.

Der Hauptteil des Bio-P-Schlamms gelangt, über eine Leitung 44 in das Denitrifikationsbeckenteil 34 sodann über eine Leitung 46 in das Nitrifikationsbeckenteil 36 des Belebungsbeckens und von dort über eine Leitung 48 in das Becken der Nachklärung 38.

Um aus dem über die Leitung 40 strömenden Teilstrom des Bio-P-Schlamms möglichst weitgehend Flüssigkeit mit hoher gelöster Phosphatkonzentration abzutrennen, ist die erste Fest/Flüssigkeitstrenneinrichtung 42 (1F) vorgesehen, von der über eine Leitung 50 ein Teilstrom der abgetrennten Feststoffe in die Überschussschlammeindickung 52 und die restlichen Feststoffe über eine Leitung 54 der biologischen Reinigungsstufe zugeführt werden, und zwar insbesondere nach dem Bio-P-Becken 32, wie die Fig. 1 verdeutlicht.

Der in der Überschussschlammeindickung 52 anfallende eingedickte Überschussschlamm wird über eine Leitung 56 der anaeroben Schlammstabilisierungsanlage (Faulungsanlage) 26 zugeführt. Die in der Überschussschlammeindickung 52 anfallende Flüssigkeit wird über die Leitung 88 der ersten Einrichtung 60 (1E) zur Fällung oder Kristallisation des in der Flüssigkeit enthaltenen Phosphats zugeführt, gegebenenfalls gemeinsam mit der ammoniumhaltigen Flüssigkeit aus der vierten Fest/Flüssigkeitstrenneinrichtung 28 (4F).

Die in der ersten Fest/Flüssigkeitstrenneinrichtung 42 (1F) anfallende orthophosphatreiche Flüssigkeit wird über eine Leitung 58 einer als erste Einrichtung bezeichneten Fällungs-Kristallisationseinheit 60 (1E) zugeführt, die auch als Ausfälleinrichtung bezeichnet wird.

Über eine Leitung 62 kann der ersten Einrichtung oder Ausfälleinrichtung 60 (1E) ammoniumreiche Flüssigkeit aus der Faulschlammentwässerung (vierten Fest/Flüssigkeitseinrichtung 28 (4F)) zugeführt werden, die je nach Stabilisierungsgrad des Faulschlamms auch höhere Orthophosphat-Konzentrationen enthalten kann.

Diese Zuführung der ammoniumreichen Flüssigkeit aus der Faulschlammentwässerung 28 (4F) macht insbesondere Sinn, sofern mit einer magnesiumbasierten Salzlösung in der Fällungs- und Kristallisationseinheit (1E) zumindest eine teilweise Überführung des in der Flüssigkeit gelösten Orthophosphat in Magnesium-Ammonium-Phosphat (Struvit) angestrebt wird.

Der Fällungs- und Kristallisationseinheit, also erste Einrichtung 60 (1E) oder Ausfälleinrichtung, wird über einen Anschluss 64 entweder eine kalziumbasierte Salzlösung oder eine magnesiumbasierte Salzlösung zudosiert, um den Fällungs- und Kristallisationsprozess zur Bindung des Orthophosphates und Überführung dessen in eine feste Form auszulösen.

Zusätzlich kann je nach gewähltem Fällungsmittel durch eine Zugabe einer weiteren Chemikalie (Lauge oder Mineralsäure) über Leitung 86 der für den Fällungsprozess optimale pH-Wert in der ersten Einrichtung (1E) eingestellt werden.

Der sodann orthophosphatarme Ablauf aus der Fällungs- und Kristallisationseinheit, also der ersten Einrichtung 60 (1E), wird über eine Leitung 66 einer weiteren (zweiten) Fest/Flüssigkeitstrenneinrichtung 68 (2F) zugeführt, in der das phosphatreiche Produkt vom Abwasser getrennt und dem Abwasserstrom entzogen und über eine Leitung 70 abgeführt wird.

Die Fällungs- und Kristallisationseinheit 60 (1E) und die weitere zweite Fest/Flüssigkeitstrenneinrichtung 68 (2F) können in einer gemeinsamen Vorrichtung ausgeführt sein.

Dass auf diese Weise phosphatentfrachtete Abwasser kann über eine Leitung 72 einer nachgeschalteten Trenneinrichtung (Abscheider) 74 z.B. in Form eines Hydrozyklons zugeleitet werden, in dem weiteres phosphathaltiges Produkt zurückgehalten und über einen feststofflastigen ersten Ablauf (z.B. Unterlauf eines Hydrozyklons) 78 zu der ersten Einrichtung 60 (1E), also der Fällungs- und Kristallisationseinheit zurückgeführt wird.

Der feststoffarme zweite Ablauf (z.B. Oberlauf eines Hydrozyklons) 76 der nachgeschalteten Trenneinrichtung (Abscheider) 74 wird zurück in die Abwasserbehandlungsanlage geleitet, und zwar, vorzugsweise hinter die anaerobe erste Prozessstufe (Bio-P-Becken 32) in die biologische Abwasserreinigungsanlage.

Die nachgeschaltete Trenneinrichtung (Abscheider) 74 ist kein zwingendes Merkmal. Vielmehr kann das Phosphat-entfrachtete Abwasser von der zweiten Fest/Flüssigkeitseinrichtung 68 (2F) unmittelbar in die Abwasserbehandlungsanlage geleitet werden, und zwar, vorzugsweise hinter die anaerobe erste Prozessstufe (Bio-P-Becken 32) in die biologische Abwasserreinigungsanlage.

Um den biologischen Phosphor-Eliminationsprozess im Bio-P-Becken 32 zu stabilisieren und zu intensivieren, ist erfindungsgemäß vorzugsweise vorgesehen, dass der in der Vorklärung 18 separierte Vorklärschlamm in der dritten Fest/Flüssigkeitstrenneinrichtung 22 (3F) oder in einer zwischen der Vorklärung 18 und dieser angeordneten separaten Vorklärschlamm vorversäuernden Stufe 122 durch erweiterte anaerob Lagerzeit vorversäuert wird, wobei gegebenenfalls eine moderate, den anvisierten Prozess unterstützenden Beheizung vorgesehen ist. Die Lagerzeit sollte mindestens 1 bis 3 Tage betragen und die Temperatur bis vorzugsweise 20 - 30°C.

Das der dritten Fest/Flüssigkeitstrenneinrichtung 22 (3F) entnommene Überstandswasser kann über eine Leitung 80 dem Bio-P-Becken 32 zugeführt werden, da das Überstandswasser reich an organischen kurzkettigen Säuren, wie Essigsäure, ist, die dort als leicht abbaubarer CSB für einen verbesserten Phosphatrücklöseprozess sorgen.

Der erforderliche Volumenstrom des vom Ablauf des Bio-P-Beckens 32 über die Leitung 40 als Teilstrom abgezweigte orthophosphatreichen Abwassers (Bio-P-Schlamms) ist einerseits abhängig von der Konzentration an gelösten Phosphaten nach dem Rücklöseprozess und andererseits von dem Wirkungsgrad der Phosphatabscheidung in der Fällungs- und Kristallisationseinheit (erste Einrichtung 60 (1E)) und der anschließenden Trennung in der zweiten Fest/Flüssigkeitstrenneinrichtung (2F) 68.

Die Konzentration des gelösten Phosphats (PO4-P) im Bio-P-Schlamm sollte, soweit möglich, größer 60 mg/l sein.

In der Fällungs- und Kristallisationseinheit 60 (1E; Ausfälleinrichtung) kann das gelöste Phosphat entweder als Kalziumphosphat (Brushit) oder als Struvit (MAP) gefällt werden.

Im Falle einer Struvit-Fällung wird zusätzlich der Wirkungsgrad der P-Abscheidung in der ersten Einrichtung, der Fällungs- und Kristallisationseinheit 60 (1E) zum einen durch die Ammoniumstickstoff-Konzentration beeinflusst, die durch die Zugabe der Flüssigkeit aus der Faulschlammentwässerung, also der aus der vierten Fest/Flüssigkeitstrenneinrichtung 28 (4F) anfallenden Flüssigkeit erreicht werden kann, und zum anderen durch den Ammoniumgehalt im Ablauf (Leitung 40) des Bio-P-Beckens 32.

Die gelöste Phosphatkonzentration (PO4-P) im Ablauf des Bio-P-Beckens 32 lässt sich durch Zugabe von leicht abbaubarem CSB erhöhen. Dieser CSB kann aus IndustrieAbwasser bzw. flüssigen Reststoffen (Molke bzw. Molke-Permeatmelasse, Schlempe oder ähnlichem) kommen und gezielt dosiert werden oder kann aus dem Überstand der dritten Fest/Flüssigkeitstrenneinrichtung (3F) des aus der Vorklärschlamm vorversäuernden Stufe 122 führenden eingedickten Vorklärschlamms kommen.

Eine zusätzliche interne Vorklärschlammvorversäuerung 122 sollte dann erfolgen, wenn der gelöste Phosphat-Gehalt im Ablauf des Bio-P-Beckens 32 nicht ausreichend ist, also PO4-P < 60 mg/l, d.h. gelöstes P < 60 mg/l, und kein externer oder interner leicht abbaubarer CSB durch beispielsweise mit leicht abbaubaren Zehrstoffen belastetes Industrieabwasser zur Verfügung steht.

Aus der Fig. 1 ist des Weiteren erkennbar, dass der in der Nachklärung 38 anfallende Schlamm als ursprünglicher Überschussschlammabzug in einem Teilstrom über die Leitung 84 der Überschussschlammeindickung 52 zugeführt wird, welche als Ausfallstrategie weiter Verwendung finden kann.

Auch ist erkennbar, dass die die feststoffarme Flüssigkeit führende Leitung 76, die von der nachgeschalteten Trenneinrichtung z.B. feststoffarmer, zweiter Ablauf des Abscheiders 74 kommt und an die biologische Abwasserreinigungsstufe anbindet. Alternativ, aber nicht bevorzugt, kann diese in der Leitung 82 von der Nachklärung 38 münden, die mit dem Bio-P-Becken 32 verbunden ist.

Erfindungsgemäß kann ein Phosphorabreicherungsprozess auch ergänzend oder alternativ dadurch verwirklicht werden, dass neben dem Bio-P-Becken 32 ein weiteres zusätzliches Teilstrom-Bio-P-Becken 132 vorhanden ist, insbesondere dann, wenn der gelöste Phosphat-Gehalt im Ablauf des Bio-P-Beckens 32 nicht ausreichend ist (PO4-P < 60 mg/l) und/oder durch externen oder internen leicht abbaubaren CSB nicht genügend intensiviert und stabilisiert werden kann. Das Teilstrom-Bio-P-Becken 132 ist auch als Anaerobeinrichtung zu bezeichnen und ist als solche für den Phosphorrücklöseprozess erforderlich.

Ist ein Teilstrom-Bio-P-Becken 132 vorgesehen, sind folgende Einheiten bzw. Verfahrensstufen vorgesehen (Fig. 2).

Der Zulauf des als Teilstrom-Bio-P-Becken bezeichneten Bio-P-Beckens 132 als Anaerobeinrichtung ist über eine Leitung 134 mit der Flüssigkeit von der Vorklärung 18 zu dem Bio-P-Becken 32 führenden Leitung 136 verbunden. 5 Vol.-% bis Vol.-30 %, insbesondere 5 Vol.-% bis 20 Vol.-%, der von der Vorklärung 18 stammenden, mechanisch vorgeklärte Flüssigkeit wird über die Leitung 134 in das Teilstrom-Bio-P-Becken 132 geführt.

Der Ablauf des Teilstrom-Bio-P-Beckens 132 ist über eine Leitung 138 mit einer Fest/Flüssigkeitstrenneinrichtung verbunden, also entsprechend der Fig. 1 mit einer ersten Fest/Flüssigkeitstrenneinrichtung 42 (1F), von der gleichfalls entsprechend Fig. 1 die anfallende Flüssigkeit über die Leitung 58 der Fällungs- und Kristallisationseinheit 60 (erste Einrichtung 1E; Ausfälleinrichtung) zugeführt wird, in der über den Anschluss 64 erforderliche Chemikalien, wie kalzium- oder magnesiumhaltige Chemikalien, zugegeben werden, damit das gelöste Phosphat in Kristallform oder als amorphen Fällungsschlamm ausfällt, wie Brushit oder Struvit.

Der für den Fällungs- und Kristallisationsprozess optimale pH-Wert in der ersten Einrichtung 42 (1E) kann über die Leitung 86 mit einer pH-Wert reduzierenden oder erhöhenden Chemikalie eingestellt werden.

Die Flüssigkeit mit den ausgefällten Kristallen bzw. amorphem Fällungsschlamm wird sodann der zweiten Fest/Flüssigkeitstrenneinrichtung 68 über die Leitung 66 zugeführt, in der die phosphorhaltigen Feststoffe als Produkt über die Leitung 70 abgeführt und die Flüssigkeit - wie im Zusammenhang mit der Fig. 1 erläutert - insbesondere über den nachgeschalteten Abscheider 74 z.B. in Form eines Hydrozyklons zugeführt wird, dessen feststofflastiger erster Ablauf (z.B. Unterlauf eines Hydrozyklons) über die Leitung 78 mit der Fällungs- und Kristallisationseinheit 68 (1E) und dessen feststoffarmer zweiter Ablauf (z.B. Oberlauf eines Hydrozyklons) über die Leitung 76 mit der zweiten Prozessstufe im Belebungsbecken 34 / 36 verbunden ist, welches aus dem Denitrifikationsbeckenteil 34 und dem Nitrifikationsbeckenteil 36 besteht.

Der Nachklärschlamm 38 wird als Rücklaufschlamm über die Leitung 156 von der Leitung 154 abzweigend dem Teilstrom-Bio-P-Becken 132 als die Anaerobeinrichtung bezeichnet zugeführt. Allerdings wird nicht der gesamte Rückschlamm dem Teilstrom-Bio-P-Becken 132 zugeführt, und zwar über die Leitung 156. Der verbleibende Teil wird über die Leitung 158 der anaeroben ersten Prozessstufe, dem Bio-P-Becken 32 der biologischen Abwasserreinigungsstufe zugeführt.

Wie sich aus der Fig. 2 ergibt, wird ein Teilstrom des mit dem Nachklärbecken 38 über die Leitung 158 geführten Schlamms der Anaerobeinrichtung 132 zugeführt. Der verbleibende Teilstrom wird über den Leitungsabschnitt 158 der anaeroben ersten Prozessstufe (Bio-P-Becken 32) zugeführt.

Von der Gesamtschlammmenge, die über die Leitung 154 aus der Nachklärung 38 abgezogen wird, werden ungefähr 5 Vol.-% bis 30 Vol.-%, insbesondere 5 Vol.-% bis 20 Vol.-%, der Anaerobeinrichtung 132 zugeführt.

Das Verfahrensschema gemäß Fig. 2 verdeutlicht die erfindungsgemäße Lehre, dass für die Phosphorabreicherung ein Teilstrom aus dem Kreislauf der biologischen Abwasserbehandlung entnommen wird. Bei der Teilstrom-Phosphorelimination gemäß Fig. 2 wird ein Teilstrom aus dem Rücklaufschlamm den in der Anaerobeinrichtung 132 herrschenden phosphorrücklösenden Bedingungen ausgesetzt. Auch werden - wie nachstehend erläutert - ein Teilstrom aus dem mechanisch vorgereinigten Abwasser und Filtrat-/Überstandswasser aus der Eindickung von vorversäuertem Vorklärschlamm gleichfalls der Anaerobeinrichtung 132 zugeführt.

Um dem Phosphor-Eliminationsprozess zu stabilisieren und zu intensivieren, erfolgt eine Vorklärschlammvorversäuerung des Vorklärschlamms, der über eine Leitung 160 einem Behälter 122 zugeführt wird, im dem eine Vorversäuerung des Vorklärschlamms unter anaeroben Bedingungen erfolgt, der auch geschlossen ausgeführt sein kann.

In der Vorklärschlamm vorversäuernden Stufe (Behälter 122) wird durch eine Vorversäuerung des Vorklärschlamms leicht abbaubarer CSB in Lösung gebracht und im Überstand oder Filtrat der mechanischen oder statischen Voreindickung von vorversäuertem Vorklärschlamm in der dritten Fest/Flüssigkeitstrenneinrichtung 22 (3F) über eine Leitung 166 dem Teilstrom-Bio-P-Becken 132 zugeführt. Die dritte Fest/Flüssigkeitstrenneinrichtung 22 (3F) kann zur gemeinsamen oder getrennten Voreindickung von vorversäuertem Vorklärschlamm und Überschussschlamm als jeweils mechanische oder statische Voreindickung ausgeführt werden.

Im Falle einer gemeinsamen Eindickung von vorversäuernden Vorklärschlamm und Überschussschlamm schließt an die dritte Fest/Flüssigkeitstrenneinrichtung 22 (3F) die Leitung 50 von Leitung 168 abzweigend, über die die in der ersten Fest/Flüssigkeitstrenneinrichtung 42 (1F) anfallenden Feststoffe geleitet werden. Das über die von der dritten Fest/Flüssigkeitstrenneinrichtung 22 (3F) kommende Leitung 166 zu dem Teilstrom-Bio-P-Becken 132 geführte Filtrat oder Überstandswasser ist in diesem Fall sowohl Flüssigkeit des Feststoffabzugs der ersten Fest/Flüssigkeitseinrichtung 42 (1F) als auch der Vorklärschlamm-Vorversäuerungseinrichtung 122.

Wie sich aus der Fig. 2 gleichfalls ergibt, gelangt ein Teilstrom des von der ersten Fest/Flüssigkeitstrenneinrichtung 42 (1F) stammenden feststoffbeladenen Stromlaufs über eine Leitung 170 vorzugsweise unmittelbar in die zweite Prozessstufe der Abwasserreinigung nach der anaeroben ersten Prozessstufe, d.h. nach dem Bio-P-Becken 32.

Der dritten Fest/Flüssigkeitstrenneinrichtung 22 (3F) und der Überschussschlammeindickung 52, falls getrennt von der dritten Fest/Flüssigkeitstrenneinrichtung 22, sind eine anaerobe Schlammstabilisierungsanlage (Faulungsanlage) 26 sowie die vierte Fest/Flüssigkeitstrenneinrichtung 28 (4F) nachgeordnet, wie dies im Zusammenhang mit der Fig. 1 erläutert worden ist. Auch gelangt die Flüssigkeit der vierten Fest/Flüssigkeitstrenneinrichtung 28 (4F) zu der ersten Einrichtung, der Fällungs- und Kristallisationseinheit 60 (1E), und zwar über eine Leitung 62, wie dies im Zusammenhang mit der Fig. 1 beschrieben worden ist.

Um die Phosphorrücklösung zu intensivieren und zu stabilisieren, wird erfindungsgemäß Überstand oder Filtrat aus dem vorversäuerten Vorklärschlamm dem Teilstrom-Bio-P-Becken 132 zugeführt, wie dies auch in Bezug auf das Verfahren der Fall sein kann, wie dies anhand der Fig. 1 erläutert worden ist.

Günstige Bedingungen für eine weitgehende Vorklärschlammvorversäuerung sind eine Schlammtemperatur von ca. 25 °C und eine mittlere hydraulische Verweildauer von 1 - 3 Tagen. Als Bauform für die Vorklärschlamm vorversäuernde Stufe (Behälter 122) ist z.B. ein zylindrischer Tank zu nennen, der vorzugsweise geschlossen ist, um die Wärmeverluste zu limitieren, wobei gleichzeitig verhindert wird, dass unerwünschte, jedoch nicht vollständig auszuschließende Ansammlung von Methan, diffus entweichen kann. Wegen der Betriebstemperatur von ca. 25 °C sollte der Tank isoliert sein. Alternativ zu einer festen baulichen Abdeckung kann die Oberfläche im Winter mit Kunststoffkugeln abgedeckt werden. Die Wassertiefe sollte idealerweise im Bereich zwischen 3 - 5 m liegen.

Bei einem Abzug von Vorklärschlamm von rund 35 g TS/E/d mit einem Volumenstrom von 1,5 l/E/d ergibt sich ein Trockenrückstand von 2,33 % und für eine Kläranlage mit 50.000 EW bzw. 100.000 EW Anschlussgröße ein erforderliches Volumen für die Vorklärschlamm vorversäuernde Stufe 122 von bis zu 225 bzw. 450 m³. Bei einer Wassertiefe von 5 m ergeben sich damit für einen zylindrischen Behälter ein Durchmesser von Ø = 8 bzw. 11 m.

Der Wärmebedarf zur Sicherstellung der Betriebstemperatur von ca. 25 °C erfordert im Winter ausgehend von minimal 7 °C Schlammtemperatur und einer Wärmeverlustrate von 0,05 °C/d eine Wärmezufuhr von etwa 87 bzw. 175 kW. Die Vorklärschlamm vorversäuernde Stufe 122 ist mit einem Rührwerk und Wärmeaustauscherrohren auszurüsten.

Besondere Vorteile und Eigenschaften von der erfindungsgemäßen Lehre kennzeichnenden Einrichtung und Prozessstufen ergeben sich aus Folgendem.

Dem Teilstrom-Bio-P-Becken 132 werden ein Teilstrom (ca. 5 bis 30 Vol.-%, insbesondere 5 Vol.-% bis 20 Vol.-%) des mechanisch vorgeklärten Abwassers (über Leitung 134), der Überstand oder das Filtrat der mechanischen oder statischen Voreindickung (dritte Fest/Flüssigkeitstrenneinrichtung 22) des vorversäuerten Vorklärschlamms über eine Leitung 166 sowie ein Teilstrom des Rücklaufschlamms (ca. 5 Vol.-% bis 30 Vol.-%, .-%, insbesondere 5 Vol.-% bis 20 Vol.-%) über die Leitung 156 aus dem Nachklärbecken 38 zugeführt. Das Verhältnis von Abwasser und Filtrat zu Rücklaufschlamm ist ca. 1:1, so dass sich ein Zulaufvolumenstrom in das Teilstrom-Bio-P-Becken 132 von üblicherweise bis zu 44 l/E/d (Liter/Einwohner/Tag) ergibt. Die mittlere rechnerische Verweildauer im anaeroben Bio-P-Becken wird gemäß der Empfehlung des DWA Arbeitsblatts A131 zu 0,75 h angesetzt. Für eine Kläranlage mit 50.000 EW bzw. 100.000 EW Anschlussgröße ergeben sich erforderliche Volumina für das Teilstrom-Bio-P-Becken 132 von bis zu 69 bzw. 138 m³.

Bei einer gewählten Wassertiefe von 5 m ergeben sich damit für einen zylindrischen Behälter ein Durchmesser von Ø = 4,5 bzw. 6 m.

Das Teilstrom-Bio-P-Becken 132 sollte mit Rührwerken ausgerüstet sein, bevorzugt nur mit einem.

Für den von dem jeweiligen Bio-P-Becken 32 bzw. Teilstrom-Bio-P-Becken 132 kommenden und der Fest/Flüssigkeitstrenneinrichtung 42 zugeführten Bio-P-Schlamm kann zur Fest/Flüssigkeitstrennung vorzugsweise ein Parallelplattenabscheider, aber auch Hydrozyklone oder anderweitige Trenneinrichtungen wie z.B. Siebe verschiedenster Bauarten zum Einsatz gelangen.

Die geneigten Platten im Parallelplattenabscheider haben z.B. eine vertikale Höhe von 1 - 2 m und eine Breite von z.B. 1 m und können mit einer Neigung von 50° - 60° zur Horizontalen und einem Abstand zueinander von 0,05 -0,10m installiert sein. Es ergibt sich dann eine Projektionsfläche der Platten in Richtung der Horizontalen von 7,5 - 15 m²/m² Grundfläche. Bei Parallelplattenabscheidern kann die Projektionsfläche der Platten als wirksame Klärfläche berücksichtigt werden. Einen Sicherheitsfaktor von 0,8 und eine Oberflächenbeschickung von 1 m/h berücksichtigt, ergibt sich für eine Kläranlage mit 50.000 EW bzw. 100.000 EW Anschlussgröße eine erforderliche Oberfläche für das Plattenpaket von 8 - 16 bzw. 16 - 32 m².

Der Ablauf des Parallelplattenabscheiders wird in die Fällungs- und Kristallisationseinheit 60 (1E) geleitet. Es kann ein Ablaufpufferbehälter vorgesehen werden.

Der Schlammablauf des beispielhaft aufgeführten Parallelplattenabscheiders 42 wird zum überwiegenden Teil in die biologische Abwasserreinigungsstufe zurückgeleitet (Leitungen 54, 170) und zum geringeren Teil als Überschussschlamm. über Leitung 50 zur bestehenden oder geplanten Überschussschlammeindickung 52 geleitet.

Eine zu geringe statische Schlammeindickung im Parallelplattenabscheider 42 kann gegebenenfalls die Hydraulik der Verfahrensstufen mechanische Schlammvoreindickung (Einrichtung 22 falls gemeinsame Eindickung von Vorklärschlamm und Überschussschlamm ausgeführt ist), Teilstrom-Bio-P-Becken 132 und Parallelplattenabscheider (erste Fest/Flüssigkeitstrenneinrichtung 42) bzw. die Überschussschlammeindickung 52 belasten.

Bezüglich der auch als erste Einrichtung bezeichneten Fällungs- und Kristallisationseinheit 60 ist Folgendes auszuführen.

In die Fällungs- und Kristallisationseinheit 60 (1E) werden in Falle einer vorgesehenen Struvitfällung der Ablauf des Parallelplattenabscheiders als Fest/Flüssigkeitstrenneinrichtung 42 (1F) welcher reich an gelösten Phosphat ist, die Flüssigkeit 62 wie das Filtrat der Faulschlammentwässerung 28 mit hohen Ammoniumstickstoff Frachten und MgCl₂-Lösung zur Versorgung mit Mg₂+-Kationen 64 sowie ggf. Natronlauge NaOH zur Einstellung des optimalen pH-Werts 86 eingeleitet bzw. in diese dosiert.

Der Fällungs- und Kristallisationseinheit 60 (erste Einrichtung 1E) kann z.B. als einfacher gerührter Behälter oder als konischer Schwebebettreaktor ausgeführt werden, vergleichbar zu den Reaktoren bei der Schnellentcarbonisierung. Die hydraulische Verweildauer ist gemäß Hinweisen in der Fachliteratur vorzugsweise auf 1,2 - 2,0 h auszulegen. Die Aufströmgeschwindigkeiten sollten unten bei bis zu 140 m/h und oben bei etwa 7 m/h liegen.

Wird eine Höhe von 5 m gewählt ergeben sich mit diesen vorgenannten Auslegungsparametern für eine Kläranlage mit 50.000 EW bzw. 100.000 EW Anschlussgröße für den oberen Durchmesser 6,50 bzw. 9,20 m, für den unteren Durchmesser 1,45 bzw. 2,05 m und für den Umlaufvolumenstrom 238 bzw. 476 m³/h.

Für den Prozess der Fest/Flüssigkeitstrenneinrichtung 42 (1F) können beispielsweise entweder Parallelplattenabscheider oder Hydrozyklone oder Siebeinheiten (Trommelsieb, Bogensieb) oder anderweitig geeignete Trennsysteme zum Einsatz kommen.

Für den Prozess der Fällung/Kristallisation in der ersten Einrichtung 60 kommen entweder Rührkessel oder Schwebebettreaktoren (Aufstromreaktoren) in Frage. Aber auch Flockungs- bzw. Fällkaskaden könnten zum Einsatz kommen.

Gemäß umfangreichen, abgesicherten, empirischen Erkenntnissen werden aus der biologischen Abwasserreinigungsstufe <0,1 g P/E/d (P = Phosphor, E = Einwohner, d = Tag) im Ablauf der Kläranlage bzw. Nachklärung und etwa 1,6 g P/E/d im Überschussschlamm abgeführt. Im Überschussschlamm sind bei optimaler biologischer Phosphorelimination gemäß dem Arbeitsblatt DWA A 131 rund 0,45 g P/E/d in den Mircoorganismen assimiliert, etwa 0,6 -1,15°g P/E/d als Poly-Phosphat zusätzlich eingelagert und im Bereich 0°-0,55 g P/E/d im Fällschlammanteil chemisch fix gebunden enthalten. Der volumetrische Überschussschlammanfall liegt gewöhnlich bei ca. 5 l/E/d. Im Überschussschlamm liegen somit Phosphorkonzentrationen wie folgt vor: assimilierter Phosphor = 90 mg/l, Poly-Phosphat-Phosphor = 120 -330 mg/l und chemisch gebundener Phosphor im Fällschlamm =0 - 110 mg/l. Der gelöste Phosphat-Phosphoranteil ist demgegenüber zunächst mit <1mg/l vernachlässigbar. Die Phosphor-gesamt-Fracht im Überschussschlamm liegt somit gewöhnlich bei etwa 1,6 g P/E/d.

Rücklaufschlamm und Überschussschlamm werden beide aus dem Nachklärbecken 38, in der Regel sogar aus dem gleichen Schacht abgezogen, so dass im Rücklaufschlamm die gleichen Phosphor- Konzentrationen vorliegen wie vorstehend im Überschussschlamm aufgeführt. Die Phosphor-Fracht im Rücklaufschlamm liegt allerdings aufgrund des Mengenverhältnisses zwischen Rücklaufschlamm und Überschussschlamm üblicherweise um den Faktor 18-20 höher.

Der Rücklaufschlamm 82 und der Ablauf der mechanischen Abwasserreinigungsstufe 18 fließen gemeinsam in das anaerobe Bio-P-Becken 32 (erste Prozessstufe der biologischen Reinigung), so dass sich im Zulauf zum Bio-P-Becken 32 die Frachten und Volumenströme von Rücklaufschlamm und Ablauf der mechanischen Abwasserreinigungsstufe addieren.

Erfindungsgemäß steht durch die Nutzung des Bio-P-Schlamms, der aus dem Bio-P-Becken 32 über die Leitung 40 der ersten Fest/Flüssigkeitstrenneinrichtung 42 (1F) zugeführt wird, eine etwa 20-fache Phosphormenge für die Phosphorabreicherung zur Verfügung, welche in der biologischen Abwasserreinigungsstufe im Kreis gefahren wird, bevor dieser als Überschussschlamm aus dem Abwasser ausgeschleust wird, wodurch mit einer Teilstromvariante (z.B. 5 - 30 %, , insbesondere 5 Vol.-% - 20 Vol.-%, wird über die Leitung 40 aus diesem Kreislauf entnommen) der erforderliche Gesamtwirkungsgrad auf 2 % Phosphor (20 g P/kg/TR) im abzutransportierenden Klärschlamm 30 gesenkt werden kann.

Gleiches gilt für das Teilstrom-Bio-P-Verfahren gemäß Fig. 2, nach dem ein Teilstrom des Rücklaufschlamms (z.B. 5 - 30 %, insbesondere 5 Vol.-% - 20 Vol.-%) und vorzugsweise ein Teilstrom aus dem mechanisch gereinigten Abwasserstrom (z.B. 5 - 30 %, insbesondere 5 Vol.-% - 20 Vol.-%) der Anaerobeinrichtung 132 für die Phosphorrücklösung zugeführt und behandelt wird, bevor der phosphorreiche Schlamm, Schlamm/Flüssigkeitsgemisch, in die nachgeschaltete erste Fest-/Flüssigkeitstrenneinrichtung 42 (1F) und in die Ausfälleinrichtung 60 (1E) gelangt.

Das Bio-P-Becken 32 ist das Becken, in dem die vermehrte biologische Phosphorelimination initiiert und unter anaeroben Bedingungen und bei Vorhandensein von biologisch leicht abbaubaren CSB Phosphor in Form von ortho-Phosphat rückgelöst werden.

Das Teilstrom-Bio-P-Becken 132, auch als Anaerobeinrichtung bezeichnet, ist das Becken, in dem zumindest ein Teilstrom des Schlamm/Abwassergemischs von zumindest der Nachklärung 38 im Nebenstrom anaeroben und phosphatrücklösenden Bedingungen ausgesetzt wird.

Als Bio-P-Prozess wird der Phosphorrücklöseprozess unter anaeroben Bedingungen im Bio-P-Becken 32 bezeichnet, der in Folge im aeroben Belebungsbecken 34 zu einer vermehrten Aufnahme von Phosphor in den Belebtschlammzellen führt.

Als Bio-P-Schlamm wird der sich im Bio-P-Becken 32 oder im Teilstrom-Bio-P-Becken 132 generierte Schlamm am Ablauf dieser Becken genannt, welcher eine höhere Konzentration an ortho-Phosphat enthält als dies im Zulauf zu diesen Becken der Fall ist.

Als Teilstrom-Bio-P wird der Bio-P-Prozess bezeichnet, dem zumindest ein Teilstrom an Schlamm/Abwassergemisch von zumindest der Nachklärung 38 ausgesetzt ist, um Phosphor in Form von ortho-Phosphat rückzulösen.

Das Volumen des Teilstrom-Bio-P-Beckens 132 sollte zum Volumen des Bio-P-Beckens 32 derart ausgelegt sein, dass das Volumen des Teilstrom-Bio-P-Beckens 132 eine Größe von etwa 5 - 30%, insbesondere 5 - 20%, des Volumens des Bio-P-Beckens 32 aufweist.

Allgemein ausgedrückt, bezieht sich die Erfindung auf eine Vorrichtung und ein Verfahren zur Abreicherung von Phosphor aus Abwasser, das zumindest mechanisch und sodann biologisch gereinigt wird. Ein Teilstrom von dem in einem anaeroben Prozess anfallenden, Orthophosphat enthaltenden Schlamm wird einer Fest/Flüssigkeitstrenneinrichtung 42 zugeführt, wobei die abgetrennte Flüssigkeit einer Einrichtung 60 zugeführt wird, in der Phosphatkristalle und/oder schwerlösliche Phosphatsalze enthaltender Phosphatfällungsschlamm gebildet werden. Nach Abscheiden der Kristalle und/oder dem schwerlösliche Phosphatsalze enthaltenden Fällungsschlamm wird die Flüssigkeit oder zumindest ein Teil dieser in die biologische Reinigungsstufe zurückgeführt.

### Bezugszeichenliste

| | | | |
|---|---|---|---|
| 10 | Rechenanlage | 70 | Leitung |
| 12 | Leitung | 72 | Leitung |
| 14 | Sandfang | 74 | Trenneinrichtung |
| 16 | Leitung | 76 | Leitung |
| 18 | Vorklärung | | |
| 20 | Leitung | | |
| 22 | dritte Fest/Flüssigkeitseinrichtung | 82 | Leitung |
| 24 | Leitung | | |
| 26 | Faulungsanlage | 86 | Leitung |
| 28 | vierte Fest/Flüssigkeitseinrichtung | 88 | Leitung |
| 30 | Leitung | | |
| 32 | Bio-P-Becken | | |
| 34 | Denitrifikationsprozess | 122 | Vorversäuerung |
| 36 | Nitrifikationsprozess | | |
| 38 | Nachklärung | | |
| 40 | Leitung | 132 | Teilstrom Bio-P-Becken |
| 42 | erste Fest/Flüssigkeitseinrichtung | 134 | Leitung |
| 44 | Leitung | 136 | Leitung |
| 46 | Leitung | 138 | Leitung |
| 48 | Leitung | | |
| 50 | Leitung | 153 | Leitung/Anschluss |
| 52 | Überschussschlammeinrichtung | 154 | Leitung |
| 54 | Leitung | 156 | Leitung |
| 56 | Leitung | 158 | Leitung |
| 58 | Leitung | 160 | Leitung |
| 60 | Ausfälleinrichtung | 162 | Leitung |
| 62 | Leitung | 164 | Leitung |
| 64 | Anschluss | 166 | Leitung |
| 66 | Leitung | 168 | Leitung |
| 68 | zweite Fest/Flüssigkeitseinrichtung | 170 | Leitung |

## Patentansprüche

1. Verfahren zur Abreicherung von Phosphor aus Abwasser, das zumindest mechanisch und sodann biologisch gereinigt wird, wobei bei der biologischen Reinigung in einer ersten Prozessstufe ein anaerober Prozess und in einer zweiten Prozessstufe zumindest ein aerober Prozess durchgeführt werden, und in der biologischen Reinigung anfallender Nachklärschlamm als Rücklaufschlamm der anaeroben ersten Prozessstufe zugeführt wird,
**dadurch gekennzeichnet,**
**dass** ein Teilstrom von in dem anaeroben Prozess der ersten Prozessstufe anfallendem Orthophosphat enthaltendem Bio-P-Schlamm oder zumindest ein Teilstrom des Rücklaufschlamms, der zum Freisetzen von Orthophosphat anaeroben Bedingungen ausgesetzt wird, einer ersten Fest/Flüssigkeitstrenneinrichtung (42) zugeführt wird, dass in der ersten Fest/Flüssigkeitstrenneinreichung (42) abgetrennter Flüssigkeit zumindest eine magnesium- oder kalziumhaltige Chemikalie zur Bildung von Phosphatkristallen und/oder schwerlösliche Phosphatsalze enthaltendem Phosphatfällungsschlamm zugegeben wird, und dass nach Abscheiden der Phosphatkristalle und/oder des die schwerlöslichen Phosphatsalze enthaltenden Phosphatfällungsschlamms die Flüssigkeit oder zumindest ein Teil dieser der biologischen Reinigung, vorzugsweise nach der ersten Prozessstufe der zweiten Prozessstufe, zugeführt wird.

2. Verfahren nach Anspruch 1,
**dadurch gekennzeichnet,**
**dass** die Kristalle und/oder der die schwerlöslichen Phosphatsalze enthaltende Phosphatfällungsschlamm, die und/oder der vorzugsweise in einer Ausfälleinrichtung (60) durch die Zugabe der zumindest einen Chemikalie gebildet werden, in einer zweiten Fest/Flüssigkeitstrenneinreichung (68) abgeschieden werden und die abgetrennte Flüssigkeit der biologischen Reinigungsstufe, vorzugsweise der zweiten Prozessstufe nach der ersten Prozessstufe, zugeführt wird.

3. Verfahren nach Anspruch 1,
**dadurch gekennzeichnet,**
**dass** in der mechanischen Reinigung anfallender Schlamm einer dritten Fest/Flüssigkeitstrenneinrichtung (22) zugeführt wird, in der unmittelbar oder mittelbar zuvor unter anaeroben Bedingungen eine Vorversäuerung (122) durchgeführt wird, dass die in der dritten Fest/ Flüssigkeitstrenneinrichtung abgetrennte Flüssigkeit der ersten Prozessstufe oder einer Anaerobeinrichtung (132) zugeführt wird, in der Rücklaufschlamm bzw. der Teilstrom von diesem den anaeroben Bedingungen ausgesetzt wird, dass ggf. während der Vorversäuerung eine Erwärmung erfolgt, dass vorzugsweise in der dritten Fest/Flüssigkeitstrenneinrichtung (22) anfallender Schlamm sowie voreingedickter Überschussschlamm einer Faulungsanlage (26) zugeführt wird und gebildeter Faulschlamm einer vierten Fest/Flüssigkeitstrenneinrichtung (28) zugeführt wird, und dass die in der vierten Fest/Flüssigkeitstrenneinrichtung aus dem Faulschlamm abgetrennte Flüssigkeit einer Ausfälleinrichtung (60) als erste Einrichtung zugeführt wird, in der nach Zugabe der zumindest einen magnesium- oder kalziumhaltigen Chemikalie die Phosphatkristalle und/oder der die schwerlöslichen Phosphatsalze enthaltende Phosphatfällungsschlamm gebildet werden.

4. Verfahren nach zumindest Anspruch 3,
**dadurch gekennzeichnet,**
**dass** die dritte Fest/Flüssigkeitstrenneinrichtung (22) für die gemeinsame oder auch eine getrennte Voreindickung des Vorklärschlamms und/oder eines Teils des Rücklaufschlamms (Leitung 50) statisch oder mechanisch ausgeführt werden kann.

5. Verfahren nach zumindest Anspruch 2,
**dadurch gekennzeichnet,**
**dass** in der zweiten Fest/Flüssigkeitstrenneinrichtung (68) anfallende Flüssigkeit einer nachgeschalteten Trenneinrichtung (74) mit Unterlauf (78) und Oberlauf zugeführt wird, wobei der Unterlauf mit der Ausfälleinrichtung (60) verbunden wird, in der die Phosphatkristalle und/oder der die schwerlöslichen Phosphatsalze enthaltende Phosphatfällungsschlamm gebildet werden und wobei der Oberlauf mit der biologischen Reinigung nach der ersten Prozessstufe in die zweite Prozessstufe verbunden wird.

6. Verfahren nach zumindest Anspruch 1,
**dadurch gekennzeichnet,**
**dass** dem in der ersten Prozessstufe (32) oder in der Anaerobeinrichtung (132) den anaeroben Bedingungen ausgesetzten Rücklaufschlamm Flüssigkeit von vorversäuertem Vorklärschlamm als auch mechanisch vorgereinigtes Abwasser zugeführt wird.

7. Verfahren nach zumindest Anspruch 1,
**dadurch gekennzeichnet,**
**dass** in der ersten Fest/Flüssigkeitstrenneinrichtung (42) abgetrennte Feststoffe der zweiten Prozessstufe zugeführt werden, insbesondere ein Teil als Überschussschlamm abgeführt und der verbleibende Teil der abgetrennten Feststoffe der zweiten Prozessstufe zugeführt werden.

8. Verfahren nach zumindest Anspruch 1,
**dadurch gekennzeichnet,**
**dass** eine Teilmenge des der ersten Prozessstufe entnommenen Bio-P-Schlamms oder zumindest ein Teilstrom des Rücklaufschlamms, der zum Freisetzen von Orthophosphat anaeroben Bedingungen ausgesetzt wird, nach Abscheiden von Phosphatkristallen und/oder schwerlösliche Phosphatsalze enthaltendem Fällungsschlamm zu der biologischen Klärstufe nach der anaeroben ersten Prozessstufe zurückgeführt wird, wobei die Teilmenge bzw. der Teilstrom 5 Vol.-% bis 30 Vol.-%, insbesondere 5 Vol.-% bis 20 Vol.-%, der Gesamtmenge des der anaeroben ersten Prozessstufe ablaufenden Schlamm-/Abwassergemischs oder der Gesamtmenge des Rücklaufschlamms ist.

9. Verfahren nach zumindest Anspruch 1,
**dadurch gekennzeichnet,**
**dass** mittelbar oder unmittelbar eine pH-Wert reduzierende oder erhöhende Chemikalie der Ausfälleinrichtung (60), in der Phosphatkristalle und/oder schwerlösliche Phosphatsalze enthaltender Phosphatfällungsschlamm gebildet werden, zugegeben wird.

10. Verfahren nach zumindest Anspruch 1,
**dadurch gekennzeichnet,**
**dass** in der zweiten Prozessstufe zunächst anoxische und sodann aerobe Bedingungen herrschen, und/oder dass zur mechanischen Reinigung eine Rechenanlange (10) und/oder ein Sandfang (14) und/oder eine Vorklärung (18), insbesondere zumindest eine Vorklärung, verwendet werden, und/oder dass zur biologischen Reinigung zumindest ein Belebungsbecken, vorzugsweise zumindest ein Denitrifikationsprozess und ein Nitrifikationsprozess, verwendet werden.

11. Vorrichtung zur Abreicherung von Phosphor aus Abwasser, umfassend eine mechanische Klärstufe, eine biologische Klärstufe, die ihrerseits eine anaerobe erste Prozessstufe, eine aerobe zweite Prozessstufe enthält und eine Nachklärung (38),
**dadurch gekennzeichnet,**
**dass** die Nachklärung (38) über eine Anaerobeinrichtung (132) mit einer ersten Fest/Flüssigkeitseinrichtung (42) oder die anaerobe erste Prozessstufe (Bio-P-Becken) mit einer ersten Fest/Flüssigkeitstrenneinrichtung verbunden ist, dass die erste Fest/Flüssigkeitseinrichtung mit einer Ausfälleinrichtung (60) verbunden ist, die ausgebildet ist zum Ausfällen von Kristallen und/oder Phosphatfällungsschlamm, dass die Ausfälleinrichtung entweder ausgebildet ist zum Abtrennen von ausgefällten Kristallen und/oder schwerlösliche Phosphatsalze enthaltendem Phosphatfällungsschlamm und mittelbar oder unmittelbar mit der biologischen Klärstufe, vorzugsweise nach der anaeroben Prozessstufe mit der zweiten Prozessstufe, verbunden ist, oder dass die Ausfälleinrichtung mit einer zweiten Fest/Flüssigkeitstrenneinrichtung (68) zum Abtrennen von ausgefällten Kristallen und/oder schwerlösliche Phosphatsalze enthaltendem Phosphatfällungsschlamm verbunden ist, die mittelbar oder unmittelbar mit der biologischen Klärstufe, vorzugsweise nach der anaeroben Prozessstufe mit der zweiten Prozessstufe, verbunden ist.

12. Vorrichtung nach Anspruch 11,
**dadurch gekennzeichnet,**
**dass** die erste Fest/Flüssigkeitstrenneinrichtung (42) zum Führen anfallender Feststoffe mit der biologischen Reinigungsstufe nach der anaeroben ersten Prozessstufe verbunden ist.

13. Vorrichtung nach zumindest Anspruch 11,
**dadurch gekennzeichnet,**
**dass** die mechanische Reinigungsstufe eine Vorklärung (18) umfasst und Schlamm führend mit einer dritten Fest/Flüssigkeitstrenneinrichtung (22) verbunden ist, in der selbst oder in einer vorgeordneten Stufe zur Vorversäuerung (122) anaerobe Bedingungen herrschen, und dass die dritte Fest/Flüssigkeitstrenneinrichtung abgetrennte Flüssigkeit führend mit der anaeroben Prozessstufe (32) oder der Anaerobeinrichtung (132) verbunden ist.

14. Vorrichtung nach zumindest Anspruch 13,
**dadurch gekennzeichnet,**
**dass** die dritte Fest/Flüssigkeitstrenneinrichtung (22) mittelbar oder unmittelbar für feststoffreichen Schlamm mit einer Faulungsanlage (26) und diese mit einer nachgeordneten vierten Fest/Flüssigkeitstrenneinrichtung (28) verbunden ist, die über eine in der vierten Fest/Flüssigkeitstrenneinrichtung abgetrennte Flüssigkeit führende Verbindung (62) mit der Ausfälleinrichtung (60) verbunden ist, der vorzugsweise mittelbar oder unmittelbar zumindest eine magnesium- oder kalziumhaltige und optional eine pH-Wert reduzierende oder erhöhende Chemikalie zuführbar ist.

15. Vorrichtung nach zumindest Anspruch 11,
**dadurch gekennzeichnet,**
**dass** die Vorrichtung eine Vorklärschlammversäuerungseinrichtung (122) aufweist, der vorzugsweise eine Heizung zugeordnet ist und in der ein anaerobes Milieu herrscht, dass die Vorklärschlammversäuerungseinrichtung (122) zur Vorklärschlammversäuerung einerseits mit einer dritten Fest/Flüssigkeitstrenneinrichtung (22) verbunden ist und andererseits mit einem Vorklärbecken (18) der mechanischen Abwasserreinigungsstufe verbunden ist, dass die dritte Fest/Flüssigkeitstrenneinrichtung mit der Anaerobeinrichtung (132) und anfallende Flüssigkeit führend verbunden ist, dass die Anaerobeinrichtung ausgangsseitig mit der ersten Fest/Flüssigkeitstrenneinrichtung (42) verbunden ist, die ausgangsseitig mit der Ausfälleinrichtung (60) verbunden ist, der die zweite Fest/Flüssigkeitstrenneinrichtung (60) nachgeordnet ist, die einen ersten Anschluss zum Abführen abgeschiedener Phosphatkristalle und/oder Phosphatfällungsschlamm und einen zweiten Anschluss für abzuführende Flüssigkeit aufweist, der mit der zweiten Prozessstufe verbunden ist, und dass die Anaerobeinrichtung (132) mit einem Schlammanschluss der Nachklärung (38) der biologischen Reinigungsstufe verbunden ist.

16. Vorrichtung nach zumindest einem der Ansprüche 11 bis 15,
**dadurch gekennzeichnet,**
**dass** über zumindest eine den Rücklaufschlamm der Nachklärung (38) führenden Verbindung (156) ein Teil des Rücklaufschlamms zu der Anaerobeinrichtung (132) und verbleibender Teil zu einem Belebungsbecken der biologischen Klärstufe vorgeschalteten anaeroben Becken führbar ist.

17. Vorrichtung nach zumindest Anspruch 11,
**dadurch gekennzeichnet,**
**dass** in der zweiten Fest/Flüssigkeitstrenneinrichtung (68) anfallende Flüssigkeit einer nachgeschalteten Trenneinrichtung (74) mit Unterlauf (78) und Oberlauf zuführbar ist, wobei der Unterlauf zu der Ausfälleinrichtung (60) führt und der Oberlauf mit der zweiten Prozessstufe (34) verbunden ist.
